# EUROPEAN PATENT APPLICATION

(11) **EP 0 545 609 A1**
(43) Date of publication of application: **09.06.1993**
(21) Application number: 92310751.0
(22) Date of filing: 25.11.1992
(51) Int. Cl.: B29C 65/12, C08J 5/12

(54) **Method for joining ultra high molecular weight polyethylene**

(30) Priority: 04.12.1991 US 803272
(71) Applicant: KRAFT GENERAL FOODS, INC., White Plains New York 10625 (US)
(72) Inventor: Carpenter, Earl L., Bellevue, Michigan 49021 (US); Van Middleworth, David R., Easy Leyroy, Michigan 49051 (US); Yother, Harold F., Battle Creek, Michigan 49015 (US); Seymour, Kenneth A., East Leyroy, Michigan 49051 (US); Garlock, Gary L., Galsburg, Michigan 49035 (US); Devlin, Michael J., Battle Creek, Michigan 49016 (US)
(74) Representative: Eyles, Christopher Thomas

(57) **Abstract**

Articles for food use are made by bonding ultra high molecular weight polyethylene surfaces. The surfaces are cleaned to remove grease and dirt. The surfaces are immobilized in spaced relation to each other with a rigid support abutting the surfaces. The surfaces (6,7) are softened and a filler material (3) surface softened with hot inert gas to make the outermost portion of each surface transparent. The filler material (3) is pressed into the joint or gap (2) between the immobilized surfaces. The article is cooled and removed from the rigid support surface.

## Description

### Field of the Invention

This invention relates to bonding ultra high molecular weight polyethylene and more particularly to joining of ultra high molecular weight polyethylene surfaces using high molecular weight polyethylene filler.

### Description of the Prior Art

Ultra high molecular weight polyethylene has been available for some time and is useful in food applications because of its low coefficient of friction and impermeability. However, it has not been widely used because it has heretofore been necessary to join surfaces of such ultra high molecular weight polyethylene using mechanical fasteners which can be difficult to keep clean. Welding, adhesive bonding, solvent cementing techniques did not make useful strong bonds.

Techniques to bond normal plastics are disclosed on pages 197 to 232 of Extrusion and Other Plastics Operations edited by Norbert M. Bikales and available from Wiley-Interscience (1971). Ultra high molecular weight polyethylene sheet material is available as Tivar-100 from Poly-Hi, Menasha Corporation, Fort Wayne, Indiana and is known for its outstanding resistance to abrasion, impact, chemicals, high energy absorption, self lubrication, low coefficient of friction and zero water absorption. Tivar-100 meets FDA requirements for use in food operations. See also U.S. Patent No. 3,944,536, to Lupton, et al., issued March 16, 1976, which describes ultra high molecular weight polyethylene.

### Summary of the Invention

We have discovered that ultra high molecular weight polyethylene can be fabricated and its surfaces joined provided the surfaces are cleaned and softened and joined with a similar softened filler material, preferably under inert conditions.

The ultra high molecular weight polyethylene surfaces are cleaned and butted together to leave a substantially uniform space or joint. The surfaces are immobilized using a firm abutting supporting surface perpendicular to the joint. The surfaces are softened, preferably by heating the surfaces with an inert hot gas until the outermost portion of the surface becomes clear. A heated rod of similar material having its outer surface also softened is forced into the joint and against the supporting perpendicular surface to fill and seal the joint. The joint is cooled and the means of immobilizing the joint removed.

### Brief Description of the Figures

Fig. 1 is a side view of two flat sheets of ultra high molecular weight polyethylene bonded together;
Fig. 2 is a side view of the corner bond of two surfaces of ultra high molecular weight polyethylene; and
Fig. 3 is a side view of the bond of two surfaces of ultra high molecular weight polyethylene.

### Brief Description of the Invention

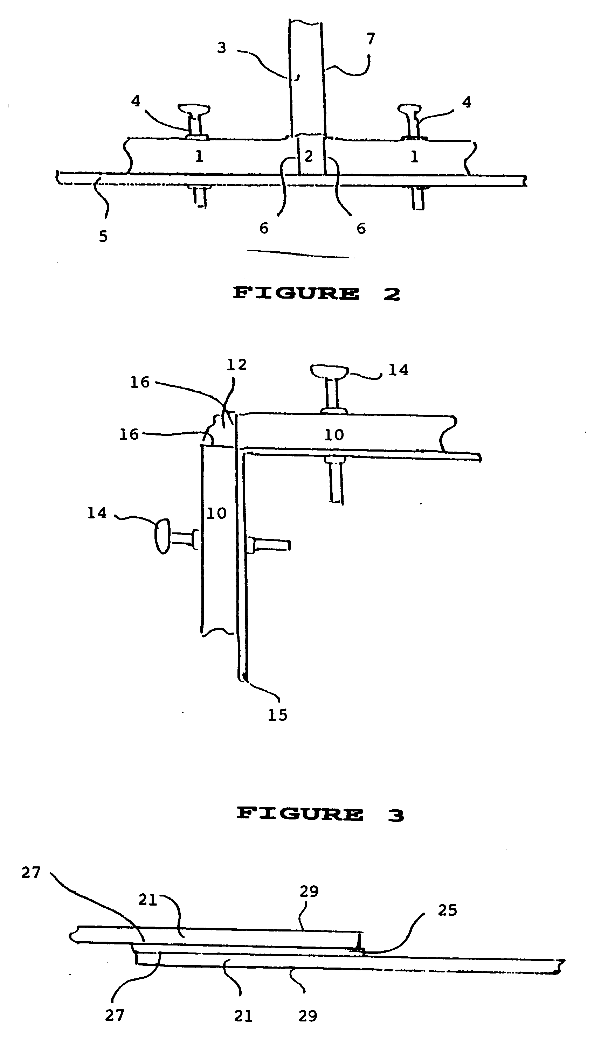

Fig. 1 shows a side view of two sheets of ultra high molecular weight polyethylene shown as 1 joined together with high molecular weight polyethylene filler material shown as 2. The polyethylene sheets are immobilized using clamps shown as 4 on a rigid metal surface shown as 5. The filler material or polyethylene rod shown as 3 is heated to soften and make clear or transparent the outermost surface shown as 7 as well as the ultra high molecular weight polyethylene surfaces shown as 6.

The heating device is not shown but employs hot inert gas to simultaneously heat the joint or gap between the sheets in the areas of 2 as well as the rod 3 as it is continuously pressed into the joint while moving away from the plane of the paper showing Fig. 1.

Fig. 2 shows the corner of a continuous sheet of ultra high molecular weight polyethylene bent at three corner 90° angles (not shown) and having a fourth corner bonded with high density polyethylene shown as 12. The ultra high molecular weight polyethylene is clamped 14 to a supporting angle iron shown as 15. The bond is made by softening the cleaned surfaces 16 of the bent sheet until the outermost portion is transparent and then forcing high molecular weight polyethylene filler into the gap generally shown as 12. The means of heating the filler and sheet outermost surfaces with hot inert gas is not shown.

Fig. 3 shows the ends of two sheets shown as 21 (or a single sheet turned on itself to form walls of a container) of ultra high molecular weight polyethylene in a spaced relationship to each other using filler material 25. The surfaces 27 of both the ultra high molecular weight polyethylene and high molecular weight polyethylene filler at 27 are softened by heating the outer surfaces 29 in the area of the filler surfaces in an oven (not shown) or by directly heating the surfaces 29 to soften the surfaces of both the ultra high molecular weight polyethylene and filler at 27 until they are clear or transparent. Pressure is applied to bond the softened surfaces and the joint is then cooled.

We have discovered a unique bonding technique for ultra high molecular weight polyethylene. Bonding of the material is useful when fabricating articles such as pipes, hoppers, rotating equipment such as coating reels, moveable gates for metering solids, slides, chutes, bins and any article of commerce wherein two or more surfaces of the ultra high molecular weight polyethylene are to be joined.

The bonding is accomplished by cleaning the surfaces to be bonded, immobilizing the surfaces in spaced relationship from each other, softening the surfaces and filler material, forcing the filler material into the gap formed between the surfaces in spaced relationship to fill the gap or joint and cooling the surfaces and filler material to form a dense, solid, smooth, strong bond. The means for immobilization are then removed and the fabricated article used in commerce.

Alternatively, two or more sheets or surfaces of ultra high molecular weight polyethylene may be bonded to each other by placing a layer of cleaned filler material between two or more cleaned surfaces. The surfaces are in a spaced relationship with each other by reasons of the layer of filler material. The surfaces of the ultra high molecular weight polyethylene and the filler material (preferably high molecular weight polyethylene) are then softened by applying heat around and through the ultra high molecular weight polyethylene so that the surfaces of both the filler and polyethylene are softened. The surfaces are then pressed together to totally fill the space between the ultra high molecular weight polyethylene with filler and cooled to form a dense, solid, strong bond.

A model LPNS plastic welding machine can be used to join the surfaces of ultra high molecular weight polyethylene. The model LPNS provides for polyolefin welding using nitrogen gas. A switching system is activated by the torch rest. When in warmup or between bonding, compressed air is fed through the torch. When the torch is used, nitrogen is fed and the air cut off. The volume of inert gas and thus the temperature of the gas can be easily controlled. The gas is electrically heated in passing through the torch. In operation, the torch is held against the surface of the ultra high molecular weight polyethylene, normally at approximately a forty-five degree angle from the surfaces to be joined. High density polyethylene filler rod is fed through the torch almost at a right angle from the surfaces to be joined, heated and pressed into the gap between the immobilized ultra high molecular weight polyethylene surfaces. Normally about 5 pounds pressure is adequate to form a satisfactory bond.

Other commercially available bonding equipment may also be employed.

The surfaces may be cleaned with any solvent suitable to remove dirt, grease, oil and moisture. While water and detergent may be employed followed by drying the surfaces, it is preferred to use organic cleaning solvents containing organic alcohols, ethers, esters or hydrocarbons commonly employed for removing grease, oil and dirt. Speedy 500 Adhesive and Cement Remover, a mixture of xylene and naphthol distributed by Kat Industries of Cleveland, Ohio works well.

The cleaned surfaces are next placed in spaced relation to each other, usually providing a uniform space or gap along the entire length of the ultra high molecular weight polyethylene. The space is about the thickness or depth of the surfaces being joined and preferably up to 35%, more preferably about 25% smaller than the thickness of the polyethylene employed and slightly smaller than the diameter of the filler rod. For example, where a 1/8 inch (3.18 mm) thick sheet of ultra high molecular weight polyethylene is employed, the gap or space between the surfaces to be joined is slightly less than 3/32 of an inch (2.38 mm), which is the diameter of the filler material employed. Where a 1/4 inch (6.35 mm) thick sheet is employed the gas is slightly less than 3/16 of an inch (4.76 mm) which is the diameter of the filler material.

The surfaces to be bonded are immobilized by clamping the sheet material abutting the surfaces to be joined to a solid rigid surface generally perpendicular to the surfaces to be joined. For example, the surfaces to be joined can be butted together and clamped to a table surface or angle iron. Any immobilization means can be used provided there is maintained the desired space between the surfaces to be joined and provided the two surfaces to be joined (when butted together) are immobilized so that filler material can be pressed against a rigid surface to form a smooth bond.

The immobilized surfaces are next softened, preferably with a hot gas, most preferably an inert gas selected from the group consisting of nitrogen, argon and carbon dioxide. While air will work, the bond is weak so that use of an inert gas is considered to be critical to forming strong and useful bonds.

Filler material, preferably high molecular weight polyethylene welding rod known as petrothene and supplied by Quantum Chemical Corporation or an equivalent is employed to fill the space between the surfaces to be bonded and the rigid support. The filler material is usually slightly larger than the size of the thickness of the gap or space between the surfaces to be bonded and up to 35%, preferably up to 25% smaller in diameter than the thickness of the ultra high molecular weight polyethylene sheet being joined. The filler material is heated to soften the outer surface and then forced into the gap where it contacts the softened surfaces of the ultra high molecular weight polyethylene. A pressure is exerted on the filler of up to 10 pounds (4.54 kg), preferably about 5 pounds (2.27 kg) which insures a good bond between filler and ultra high molecular weight polyethylene surfaces.

The pressure forces the high molecular weight polyethylene filler against the softened ultra high molecular weight polyethylene surfaces and forms a tight and adhering joint. We have found that when the surfaces to be joined and the filler are properly softened the outer 1/64 to 1/32 of an inch (0.40 to 0.79 mm) of the outermost surface turns clear while the remainder of the polyethylene filler rod and ultra high molecular weight polyethylene remain opaque. If the entire filler is melted or too much of the ultra high molecular weight polyethylene surface is melted the bond is weak. If butt or lap joints are used, without filler, the joints are weak or non-existent. It appears critical to soften a small outermost portion of the surfaces to be joined and the filler to obtain a satisfactory strong joint.

By forcing the filler against the rigid surface perpendicular to the surfaces to be filled, a smooth surface on the side touching the rigid surface is assured so that a smooth continuous surface exists on both sides of the joined ultra high molecular weight polyethylene and within the gap between the bonded surfaces. This insures proper cleanliness is maintained during use and that the low coefficient of friction is not disturbed. Fabricated articles with such a bond can pass food, both dry and wet, without accumulation in or about the filled area.

The surfaces to be bonded are preferably heated with hot inert gas at a temperature of 100° to 500°C, preferably 300° to 400°C, most preferably about 350°C. The temperature on the surface of the ultra high molecular weight polyethylene is about 300°C which is sufficient to soften the material and cause it to become clear.

Up to 10 psi (0.70 kg/cm²) pressure is applied to the filler material pressing against the surfaces to be joined and the rigid substantially perpendicular support or immobilization surface. Preferably about 5 pounds of force (2.27 kg) is used to give good bonds.

On forcing the clear outermost surface of the filler against the clear outermost surfaces to be joined, a smooth, solid, impervious bond is formed on cooling. The means of immobilizing the surfaces and the rigid perpendicular surface are then removed.

Obviously the gap between the surfaces can be angied by touching one surface to another at 90° angles or by cutting angular surfaces when joining flat sheets of ultra high molecular weight polyethylene.

The invention is further described but not limited by the following examples.

### Example 1

Two sheets of one eighth inch (3.17 mm) thick ultra high molecular weight polyethylene were cleaned with Speedy 500 Adhesive and Cement Remover, distributed by Kent Industries, of Cleveland, Ohio. The sheets were clamped to a steel table top to immobilize the sheets and to maintain the surfaces to be bonded in a spaced relationship slightly less than about 3/32 of an inch (2.38 mm) apart. High density polyethylene filler material is preheated as are the surfaces to be bonded using a Laramy Product Inc. plastic bonding machine. Nitrogen gas at 2 psi (1.15 bar) and 350°C is used for heating the plastic. A 3/32 inch (2.38 mm) diameter filler rod of high density polyethylene is fed at a rate of 28 inches per minute (0.71 meters per minute) into the gap between the surfaces to be bonded and the table top. A downward force of about five pounds (2.27 kg) is applied to force the material into the gap and to bond the sheets together. On cooling the clamps are removed and the sheets lifted from the table. The side adjacent to the table is smooth having a smooth layer of less than three thirty seconds of an inch (2.38 mm) between and bonded to the two ultra high molecular weight polyethylene surfaces. The bond is extremely strong.

When one quarter inch (6.35 mm) sheet was employed, a gap of about slightly less than 3/16 of an inch (4.76 mm) was used and a 3/16 inch (4.76 mm) filler rod applied to the gap at 16 inches/minute )0.41 meters per minute) using a force of five pounds (2.27 kg). A smooth strong bonded sheet was obtained on cooling.

### Example 2

A single sheet of one quarter inch (6.35 mm) ultra high density polyethylene is cleaned and softened using hot air and bent into a cylindrical form. The ends are clamped to a steel angle iron with one face of the angle iron against the inner sides of the sheet and about perpendicular to the surfaces to be bonded. A gap of slightly less than about three thirty seconds of an inch (2.38 mm) is left between the surfaces. 3/16 inch (4.76 mm) high density polyethylene filler rod under five pounds (2.27 kg) force is applied to the space between surfaces as in Example 1 at 16 inches per minute (0.41 meters per minute) using the Laramy plastic bonding machine and hot nitrogen gas at 2 psi (1.15 bar) heated to 350°C. After the entire length between the spaced surfaces is filled, the cylinder is allowed to cool and the angle iron removed. The pipe or cylinder has a smooth inner surface which does not impede transfer of food through the pipe.

### Example 3

A simple square store box is made by heating ultra high molecular weight polyethylene sheet and making three 90° bends. The two surfaces of the sheet at 90° from each other are immobilized using clamps and angle iron so that the inner edge of the polyethylene surfaces touch. Filler is heated using 350°C nitrogen gas and applied to the 90° cavity formed by the surface of the polyethylene sheet which is also heated with the same gas. Both filler and the cavity surfaces are softened and becomes clear prior to bonding. A solid bond is formed completing the fourth corner of the container. The bottom is bonded in a similar manner by placing the four inside edges of the surface in contact with the inner edges of the side walls and filling the resulting 90° cavity formed by the polyethylene surfaces.

Many shaped articles may be formed and joined as disclosed herein.

## Claims

1. A method of joining ultra high molecular weight polyethylene into useful articles comprising:
a) cleaning the surfaces of ultra high molecular weight polyethylene which are to be joined;
b) aligning the surfaces of the ultra high molecular weight polyethylene together to leave a substantially uniform space between the surfaces;
c) firmly holding the surfaces in substantially uniform spaced relationship;
d) heating the surfaces of the ultra high molecular weight polyethylene while held in spaced relationship to soften the outermost surface;
e) placing a filler material, having its outer surface heated to cause at least the outermost surface to soften, into the space between the softened surfaces and firmly pressing said material against the ultra high molecular weight polyethylene to completely fill the space between the ultra high molecular weight polyethylene; and
f) cooling the joint.

2. A method according to claim 1, in which the filler material is high molecular weight polyethylene.

3. A method according to claim 1 or claim 2, in which the ultra high molecular weight polyethylene surfaces are heated with a hot inert gas.

4. A method according to any one of claims 1 to 3, in which the ultra high molecular weight surfaces and the filler material are heated and softened with a hot inert gas.

5. A method according to claim 3 or claim 4, in which the inert gas is nitrogen, argon, carbon dioxide or a mixture thereof.

6. A method according to any one of claims 3 to 5, in which the inert gas is heated to a temperature of from 200° to 500°C.

7. A method according to any one of claims 1 to 6, in which a firm support is placed substantially perpendicular to the surfaces to be bonded and filler material is pressed against said firm support, wherein the depth of the substantially uniform space is greater than the width between the spaced surfaces and greater than the diameter of the filler material.

8. A method according to claim 7, in which the depth of the uniform spaced surface is up to 35% greater than the width between the spaced surfaces and up to 25% greater than the width of the filler material.

9. A method according to any one of claims 1 to 8, in which the heated filler material is pressed in the space between the heated surfaces at up to 10 pounds (4.54 kg) pressure.

10. A fabricated article comprising:
shaped ultra high molecular weight polyethylene having two surfaces of the ultra high molecular weight polyethylene bonded together by a polyethylene filler material.

11. A article according to claim 10 in which the filler material is high molecular weight polyethylene.
